# EUROPEAN PATENT SPECIFICATION

(11) **EP 1 758 412 B1**
(45) Date of publication and mention of the grant of the patent: **06.01.2010**
(21) Application number: 05801821.9
(22) Date of filing: 21.10.2005
(51) Int. Cl.: H04W 88/02, H04L 29/06, A63F 13/12

(54) **GAME SYSTEM, GAME PLATFORM AND METHOD FOR APPLYING POSITION INFORMATION IN THE GAME**
SPIELESYSTEM, SPIELEPLATTFORM UND VERFAHREN ZUM ANWENDEN VON POSITIONSINFORMATION IN DEM SPIEL
SYSTEME DE JEU, PLATE-FORME DE JEU ET PROCEDE PERMETTANT D'APPLIQUER DES INFORMATIONS DE POSITION DANS LE JEU

(30) Priority: 30.10.2004 CN 200410090262
(43) Date of publication of application: 28.02.2007
(73) Proprietor: Huawei Technologies Co., Ltd., Longgang District, Shenzhen Guangdong 518129 (CN)
(72) Inventor: WANG, Shengqiong, Shenzhen Guangdong 518-129 (CN); LIU, Qian, Shenzhen Guangdong 518-129 (CN); SUN, Qian, Shenzhen Guangdong 518-129 (CN); XING, Lianjun, Shenzhen Guangdong 518-129 (CN)
(74) Representative: Thun, Clemens
(86) International application number: PCT/CN2005/001736
(87) International publication number: WO 2006/047929

(56) References cited:
- CN-A- 1 487 701
- CN-A- 1 522 085
- GB-A- 2 375 006
- JP-A- 2002 049 681
- KR-A- 2002 058 561
- KR-A- 2004 009 932
- US-A1- 2002 111 201
- US-A1- 2004 058 732
- US-A1- 2004 185 881

## Description

### Field of the Invention

The present invention relates to the mobile network game technology, and particularly to a game system, a game platform, a game server, a game terminal, a method for a game system obtaining location information and a method for applying location information in a game.

### Background of the Invention

Over the past few years, along with the continuous development and improvement of mobile communication network technologies and positioning technologies and with a start of combination of the both, location relevant mobile communication services emerge.

For example, a high accuracy location service is provided for the public through the combination of a Code Division Multiple Access (CDMA) 1X network and a Global Positioning System (GPS) positioning technique, which makes it possible to locate a network user accurately, with a positioning accuracy up to 5-50 meters outdoors, as long as the terminal of the network user is in an "on" state and within the coverage of the CDMA 1X network no matter indoors or outdoors.

At present, the positioning technique is mainly applied to the following occasions: locating of a user, location inquiries between users, various information services for living, transportation, entertainment, service and public facility related to current location of user, rescue location services, nurse services, car dispatching, logistic management, location advertisements, and company inner management, etc. The positioning technique provides the mobile communication network with location information and relevant services via a location service platform.

Although the positioning technique is developing rapidly, up to now there is still no applications combined with mobile network games which are undergoing an extremely rapid development. The appearance of mobile network games based on graphical user interface, along with the present most popular short message games and multimedia message games, establishes a foundation for the combination of the mobile network game and the location service platform.

However, because the existing location platform services and mobile game services are developing independently in their own fields, and location information has not been applied to mobile games, the mobile games may not make use of the existing positioning system resources.

Document US-2004/0185881 discloses a location dependent game system.

### Summary of the Invention

The embodiments of the present invention provide a game system and a game platform to make it possible to obtain location information of a game user via a positioning system.

The embodiments of the present invention provide a method for a game system obtaining location information so that the game system may obtain location information of a game user via a game user terminal.

The embodiments of the present invention provide a method for applying location information in a game to enable a game to change itself correspondingly according to changes of game user location information.

The embodiments of the present invention also provide a game server and a game user terminal.

A method for applying location information includes:
obtaining, by a game server, location information of a game user terminal according to game user information;
obtaining a game configuration related to location according to the location information; and
performing the steps of starting a game, changing a game logic and charging for a game on the game server according to the game configuration related to location;
wherein the game configuration related to location comprises a configuration for starting different games according to different location information, a configuration for performing different game logics according to different location information, and a configuration for performing different game charging rates according to different location information,
and wherein the game logic includes one or more of a game scenario, a game scene, and a game site.

Said obtaining the location information of the game user terminal according to the game user information includes:
sending, by the game server, a location inquiry request containing the game user information to a positioning system and obtaining the location information of the game user terminal from the positioning system.

Said obtaining the location information of the game user terminal according to the game user information includes:
estimating, by the game server, current location information of the game user terminal according to the location information f the game user terminal obtained from a positioning system last time.

The game user information includes a game user terminal number.

A game server includes:
a first module, operable for obtaining location information of a game user terminal according to game user information;
a second module, operable for obtaining a game configuration related to location according to the location information;
a third module, operable for performing the steps of starting a game, changing a game logic and charging for a game according to the game configuration related to location;
wherein the game configuration related to location comprises a configuration for starting different games according to different location information, a configuration for performing different game logics according to different location information, and a configuration for performing different game charging rates according to different location information;
and wherein the game logic comprises one or more of a game scenario, a game scene, and a game site.

The first module comprises:
a first sub-module, operable for sending a location inquiry request containing the game user information to a positioning system;
a second sub-module, operable for obtaining the location information of the game user terminal from the positioning system.

The first module is operable for estimating current location information of the game user terminal according to the location information of the game user terminal obtained from a positioning system last time.

As can be seen from the above mentioned technical scheme, the game system includes a location inquiry unit which may request and obtain location information of a game user terminal from a positioning system. The game platform also includes a location inquiry unit which may request and obtain location information of a game user terminal from the positioning system. Based on the game system and the game platform, it is possible to obtain location information of a game user terminal so as to provide a hardware support for applying the location information in a mobile game. The game system or the game platform in the related art does not possess such ability of inquiring location information of a game user terminal, so applications of the game system and the game platform according to the embodiments of the present invention may make it possible to inquire and obtain location information of a game user terminal.

The method for the game system obtaining location information includes: a game user terminal sending a location inquiry request to a positioning system, obtaining location information from the positioning system, and sending the location information to a game server. In the related art, the game user terminal may obtain location information but not send to the game server. Compared with the related art, the embodiments of the present invention make it possible that the game server may use the location information obtained by the game user terminal to perform appropriate processing to games.

The method for applying location information in a game includes: a game server implementing a game based on location information and a game configuration after requesting and obtaining the location information of a game user terminal. The embodiments of the present invention may enable mobile operators to provide rich and colorful services related to location information to game users, solve a problem that it is unable to combine the game system or the game platform with the user location in the related art, bring more entertainments to mobile games, and provide a wide development space for the combination of games and positioning techniques.

### Brief Description of the Drawings

FIG. 1 is a schematic diagram illustrating the structure of a game system according to an embodiment of the present invention.
FIG. 2 is a schematic diagram illustrating the structure of a game system in which a location inquiry unit is located in a game server.
FIG. 3 is a schematic diagram illustrating the structure of a game system in which a location inquiry unit is located in a game user terminal.
FIG. 4 is a schematic diagram illustrating the structure of a game platform according to an embodiment of the present invention.
FIG. 5 is a simplified flowchart illustrating a method for starting a game according to location information in a game in accordance with an embodiment of the present invention.
FIG. 6 is a simplified flowchart illustrating a method for performing a game logic processing according to location information in a game in accordance with an embodiment of the present invention.
FIG. 7 is a simplified flowchart illustrating a method for charging for a game according to location information of a game user in accordance with an embodiment of the present invention.

### Detailed Description of the Invention

Generally, each game server may only run one online network game. Game servers are developed by mobile terminal equipment manufacturers, and games are developed by game developers, both of which have no uniform standard. Usually, a game user terminal and a game server constitute a game system. After the game user terminal logs on the game server, a user may play a network game online.

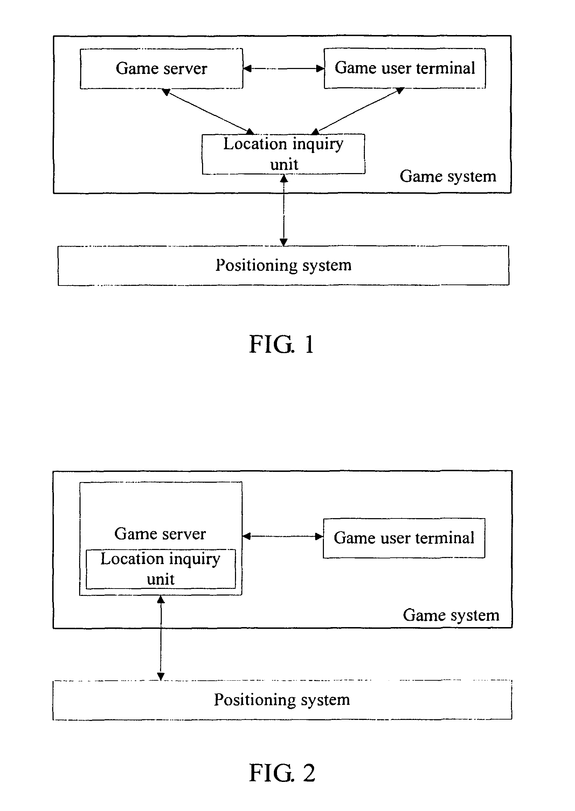

FIG. 1 is a game system provided by an embodiment of the present invention. With reference to FIG. 1, the game system includes not only a game user terminal and a game server, but also a location inquiry unit. In the game system, the location inquiry unit connects with the game user terminal and the game server respectively. The location inquiry unit may obtain location information of the game user terminal through an interaction with a positioning system.

A main procedure of the game system obtaining the location information includes:
after receiving a location inquiry request sent from the game user terminal or the game server, the location inquiry unit sends a location request message containing game user terminal information to the positioning system;
the positioning system obtains location information of the game user terminal according to the game user terminal information in the location request message and returns the location information to the location inquiry unit;
after obtaining the location information, the location inquiry unit sends the location information to the game server or the game user terminal requesting the location inquiry;
the game server or the game user terminal performs a corresponding processing to the game according to the location information.

The game user terminal information that the location inquiry unit sends to the positioning system includes a game user terminal identifier, such as a game user terminal number, i.e., Mobile Station International ISDN Number (MSISDN).

The location information of the game user terminal obtained by the location inquiry unit from the positioning system includes a variety of information, such as longitude and latitude, altitude, motion velocity and motion direction of the game user terminal, and geographic information of the current location, e.g., area name and peripheral geographical information, as well as additional information of the current location, such information related to the current location as weather and traffic information. The information related to location may be obtained by the present positioning system.

As shown in FIG. 2, the location inquiry unit is located in the game server, and the game server directly may process a game according to location information obtained by location inquiry unit, or send the location information to the game user terminal for corresponding processing.

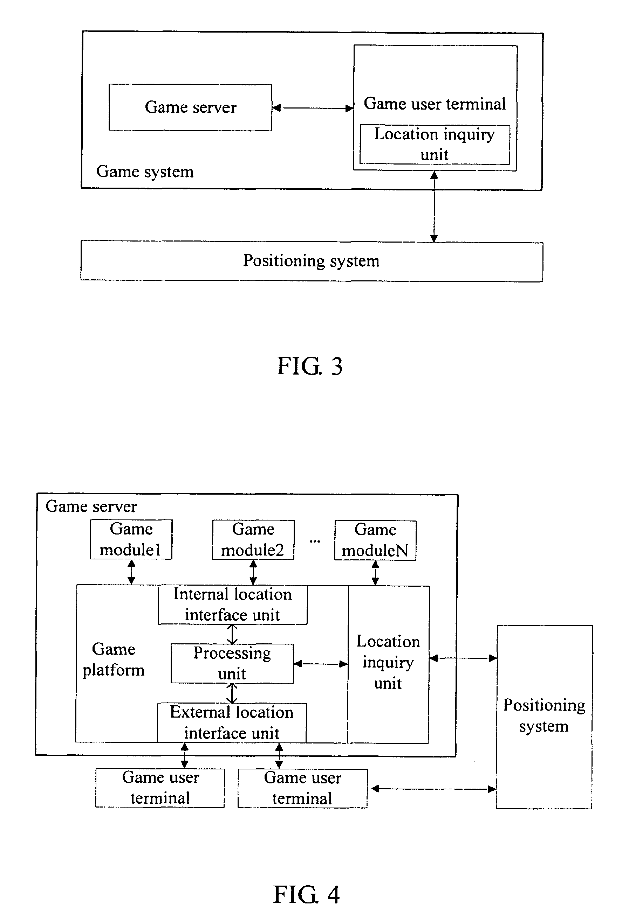

As shown in FIG. 3, the location inquiry unit is located in the game user terminal, and the game user terminal sends a location inquiry request to a positioning system, and receives location information returned from the positioning system. The game user terminal may directly process a game according to the location information obtained by the location inquiry unit, or send the location information to the game server, and the game server performs a corresponding processing according to the location information. Further, the game server may send a location inquiry request to the game user terminal. After responding to the location inquiry request, the game user terminal sends the location inquiry request to the positioning system, receives location information returned from the positioning system, and returns the location information to the game server.

Furthermore, the location inquiry unit may be located both in the game server and the game user terminal. In this way, both the game server and the game user terminal may send a location inquiry request to the positioning system and obtain location information from the positioning system. For example, if the load of sending by the game server a location inquiry request exceeds a threshold value, the game user terminal may be asked to send the location inquiry request to the positioning system.

Along with the development of network game techniques, a new game system different from an original game system providing single games emerges. In the game system, operators provide a uniform game platform on the game server, and the game platform may run different game modules provided by game developers. The game platform connects with game modules and game user terminals respectively to provide such functions as charging, timer, credit management and session management and so on, and simplifies development of game at the server side.

FIG 4 is a game platform provided by an embodiment of the present invention. With reference to FIG. 4, the game platform respectively connects with multiple game modules supported by itself and game user terminals. In the game platform, apart from the original processing unit for realizing various functions of the game platform in the above paragraphs, a location inquiry unit that is able to obtain location information of a game user terminal from a positioning system is included. The location inquiry unit may be set separately or set in the original processing unit.

The main procedure of the game platform obtaining the location information includes:
after receiving a location inquiry request from the processing unit, the location inquiry unit in the game platform sends a location request message containing game user terminal information to the positioning system;
the positioning system obtains location information of the game user terminal according to the game user terminal information, and returns the location information to the location inquiry unit;
the location inquiry unit sends the location information to the processing unit and the processing unit performs a corresponding processing to the game according to the location information.

As described hereinbefore, the game user terminal information sent from the location inquiry unit to the positioning system includes a game user terminal identifier, such as a game user terminal number, i.e., MSISDN.

As described hereinbefore, the location information of the game user terminal obtained by the location inquiry unit from the positioning system includes a variety of information, such as longitude and latitude, altitude, motion velocity and motion direction of the game user terminal, and geographic information of the current location, such as location area and peripheral geographical information, as well as additional information of the current location, such information related to the current location as weather and traffic information.

In the game platform shown in FIG. 4, an internal location interface unit for transferring location information with multiple game modules running on the game platform may be included. A game module sends a location inquiry request containing game user information to the game platform, wherein the game user information may be an account number of the game user or a game user terminal number. The processing unit forwards the location inquiry request to the location inquiry unit for processing. The location inquiry unit sends a location request message to the positioning system and returns location information received to the processing unit, and the processing unit returns the location information to the game module.

In the game platform shown in FIG. 4, an external location interface unit for transferring location information with game user terminals may be included. A game user terminal sends a location inquiry request to the processing unit, and the processing unit forwards the location inquiry request to the location inquiry unit. The location inquiry unit sends a location request message to the positioning system and returns location information received to the processing unit, and the processing unit returns the location information to the game user terminal.

The internal location interface unit and the external location interface unit may be set separately or set in the processing unit.

As shown in FIG. 4, the game user terminal may directly request and obtain the location information from the positioning system. In this case, the processing unit may obtain the location information from the game user terminal through the external location interface unit and perform a corresponding processing to the game.

For either the game system shown in FIG. 1 or the game platform shown in FIG. 4, the request/response mode between the system/platform and the positioning system is a server/client mode, wherein the game platform or the game system is the client, and the positioning system is the server.

Usually, the positioning system provides two network interfaces for the client, one is a security interface using a Security Socket Layer/Transport Layer Security (SSL/TLS) encryption to ensure interface security, and the other is an interface without encryption. If being located in a security area, the client may connect with the positioning system through the interface without encryption; if being located in an unsafe area, the client may connect with the positioning system through the security interface to ensure information security and reliability.

Both the location request message and the location response message include a message header and a message body. The message header includes authentication information, e.g., a client identifier which may be a game system identifier or a game platform identifier, or a user identifier, e.g., a game user terminal number, and a length of the message body. The message body includes a specific content of the location request message and the location response message with an Extensible Mark-up Language (XML) format.

The client sends a location request message to the positioning system through a Hyper Text Transfer Protocol (HTTP) POST mode. All location request messages are sent to a given Universal Resource Locator (URL). The positioning system responds to the request message and returns a location response message, and the specific content of the location information is in the message body.

Based on the game system shown in FIG. 1 or the game platform shown in FIG. 4, mobile operators may apply location formation in a mobile game to provide rich and colorful game services. Several methods for applying the location information in a mobile game will be described hereafter.

### (1) Starting a game according to the location information:

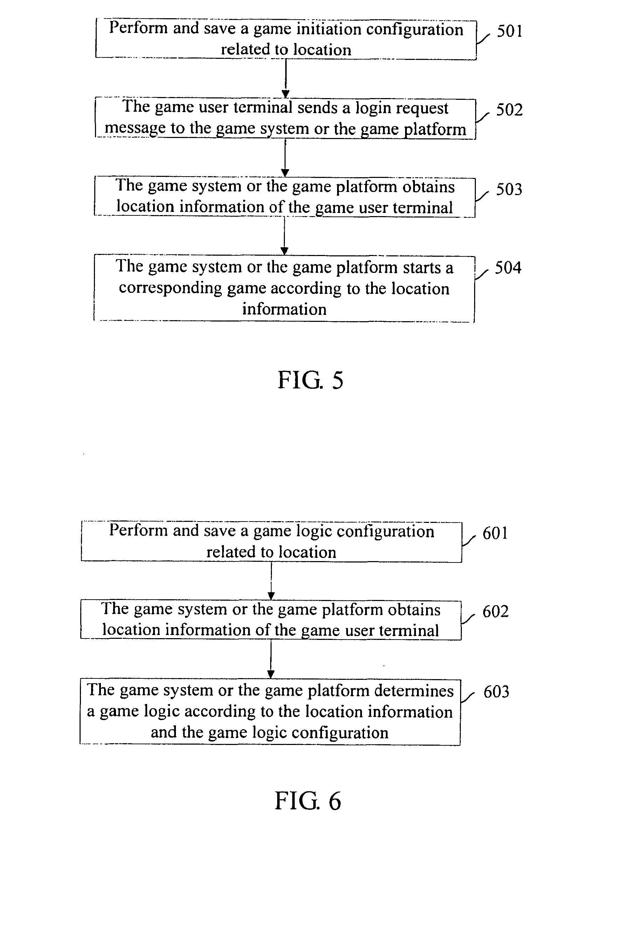

FIG. 5 is a simplified flowchart illustrating a method for starting a game according to location information in a mobile game in accordance with an embodiment of the present invention, which includes the following steps.

Step 501: a user performs a game initiation configuration related to location on the network side of a mobile game, e.g., starts different games or game scenes according to different locations and saves the game initiation configuration on the network side of the mobile game. The network side of the mobile game is a game server or a game platform in the game system.

Step 502: the user sends a login request message to the network side of the mobile game via the game user terminal.

Step 503: the network side of the mobile game inquires and obtains location information of the game user terminal according to the game user terminal number.

Step 504: the network side of the mobile game starts a corresponding game or game scene for the user according to the location information obtained and the configuration saved by the user.

For example, according to the motion velocity parameter in the location information, the network side of the mobile game may determine a state of the user. The motion velocity exceeding a threshold value represents that the user is on a running vehicle, and the network side of the mobile game will start a game suitable for playing on the running vehicle for the user.

For example, according to the area parameter in the location information, the network side of the mobile game may determine a specific area of the user. If the user is at home, the network side of the mobile game may start a longer game or game scene for the user; if the user is at other area, the network side of the mobile game may start a shorter game or game scene for the user.

In this way, games or game scenes started after the user logs on are not all the same, and may be changed according to the location of the user.

### (2) Determining a game logic according to the location information:

FIG. 6 is a simplified flowchart illustrating a method for implementing a game logic processing according to the location information in a mobile game. As shown in FIG. 6, the method includes the following steps.

Step 601: a user or an operator performs a game logic configuration related to location on the network side of a mobile game, e.g., determines the location of the game role according to the location of the user and saves the game logic configuration on the network side of the mobile game.

Step 602: during a mobile game, the network side of the mobile game inquires and obtains location information of the game user terminal from the positioning system according to the game user terminal number.

Step 603: the network side of the mobile game determines a game logic in the game according to the location information obtained and the game logic configuration saved for the user.

For example, according to the longitude and latitude parameters in the location information, the network side of the mobile game determines a map in the game corresponding to a real map, and the location information of the game user terminal determines the location of the game role of the user is on the game map. In a multi-person network game, other game roles near the game role of a real user on the game map are near the real user in the real location.

For example, according to the weather parameter in the location information, the network side of the mobile game determines the weather at the scene in the game. If it is sunny in the area of the user, the weather at the scene in the game is set as sunny by the network side of the mobile game.

In this way, the user may change the game logic according to the real location information, namely change the scenario progress and scene of the game.

### (3) Charging for a game according to the location information:

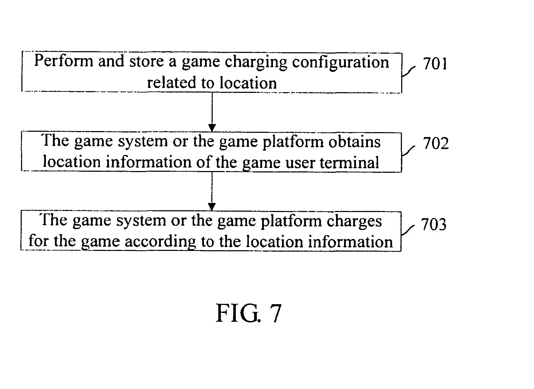

FIG. 7 is a simplified flowchart illustrating a method for charging for a game according to location information of a game user. As shown in FIG. 7, the method includes the following steps.

Step 701: the network side of the mobile game sets different charging rates according to different location information, e.g., sets different charging rates according to different geographical areas, or motion velocity of the game user terminal.

Step 702: the network side of the mobile game inquires and obtains location information of the game user terminal from the positioning system according to the game user terminal number.

Step 703: the network side of the mobile game charges for a game according to the location information of the game user terminal and a preset charging rate.

For example, according to the area parameter in the location information, the network side of the mobile game may set some areas as preferential areas. If the user moves to these preferential areas, the charging rate is reduced; if the user leaves these preferential areas, the charging rate is increased.

For example, according to the motion velocity parameter in the location information, the network side of the mobile game may adopt different charging rates according to different motion velocities. If the motion velocity of the game user terminal exceeds a threshold value, the charging rate reduces so as to encourage the user to play the game in a vehicle; on the contrary, for security, when the motion velocity of the game user terminal exceeds a threshold value, the charging rate increases to avoid an accident during the vehicle running.

In this way, by obtaining the location information of the game user, a flexible charging is implemented for the game.

To sum up, based on the game system shown in FIG. 1, or the game platform shown in FIG. 4, game users may enjoy rich and colorful game services related to their real location information. A premise for realizing the game services is that the network side of the mobile game requests and obtains location information from the positioning system. However, if the network side of the mobile game frequently inquires the location information from the positioning system, the network data interaction will increase and the network transmission efficiency will decrease so as to affect the network operation. In this case, an interval of inquiry may be lengthened, or at some moments when it is necessary to obtain location information, the current location of the game user terminal is estimated through computing instead of requesting and obtaining the location information from the positioning system. For example, according to the longitude and latitude and motion velocity obtained last inquiry, the current location of the game user terminal is estimated, so as to reduce the effect of inquiring the location information on network transmission.

Only some embodiments for applying location formation in a game are included in the above description of the method according to the embodiments of the present invention, and many applications related to location are still not described herein, but their principles are the same, namely changing the game according to different location information of the game user inquired and obtained and the game configuration related to location preset, for which the detailed description is omitted.

The game system, the game platform, game server, game user terminal and the method for applying the location information in a game according to the embodiments of the present invention may be used not only in an online network game of a mobile terminal but also in an online network game of a fixed terminal.

It should be appreciated that the foregoing is only preferred embodiments of the invention and is not for use in limiting the invention. Any modification, equivalent substitution, and improvement without departing from the principle of this invention should be covered in the protection scope of the invention.

## Claims

1. A method for applying location information, comprising:
obtaining, by a game server, location information of a game user terminal according to game user information;
obtaining a game configuration related to location according to the location information;
performing the steps of starting a game, changing a game logic and charging for a game on the game server according to the obtained game configuration related to location;
wherein the game configuration related to location comprises a configuration for starting different games according to different location information, a configuration for performing different game logics according to different location information, and a configuration for performing different game charging rates according to different location information;
and wherein the game logic comprises one or more of a game scenario, a game scene, and a game site.

2. The method of Claim 1, wherein said obtaining the location information of the game user terminal according to the game user information comprises:
sending, by the game server, a location inquiry request containing the game user information to a positioning system and obtaining the location information of the game user terminal from the positioning system.

3. The method of Claim 1, wherein said obtaining the location information of the game user terminal according to the game user information comprises:
estimating, by the game server, current location information of the game user terminal according to the location information of the game user terminal obtained from a positioning system last time.

4. The method of any of Claims 1 to 3, wherein the game user information comprises a game user terminal number.

5. A game server, comprising:
a first module, operable for obtaining location information of a game user terminal according to game user information;
a second module, operable for obtaining a game configuration related to location according to the location information;
a third module, operable for performing the steps of starting a game, changing a game logic and charging for a game according to the game configuration related to location;
wherein the game configuration related to location comprises a configuration for starting different games according to different location information, a configuration for performing different game logics according to different location information, and a configuration for performing different game charging rates according to different location information;
and wherein the game logic comprises one or more of a game scenario, a game scene, and a game site.

6. The game server of Claim 5, wherein the first module comprises:
a first sub-module, operable for sending a location inquiry request containing the game user information to a positioning system;
a second sub-module, operable for obtaining the location information of the game user terminal from the positioning system.

7. The game server of Claim 5, wherein the first module is operable for estimating current location information of the game user terminal according to the location information of the game user terminal obtained from a positioning system last time.

8. The game server of any of Claims 5 to 7, wherein the game user information comprises a game user terminal number.

## Patentansprüche

1. Verfahren zum Anwenden von Ortsinformationen, mit den folgenden Schritten:
Erhalten von Ortsinformationen eines Spiel-Benutzerendgeräts durch einen Spiel-Server gemäß Spiel-Benutzerinformationen;
Erhalten einer Spiel-Konfiguration bezüglich des Orts gemäß den Ortsinformationen;
Ausführen der Schritte des Startens eines Spiels, des Ändems einer Spiellogik und des Abrechnens für ein Spiel auf dem Spiel-Server gemäß der erhaltenen Spiel-Konfiguration bezüglich des Orts;
wobei die Spiel-Konfiguration bezüglich des Orts eine Konfiguration für das Starten verschiedener Spiele gemäß verschiedenen Ortsinformationen, eine Konfiguration für das Ausführen verschiedener Spiellogiken gemäß verschiedenen Ortsinformationen und eine Konfiguration für das Ausführen verschiedener Spieltarife gemäß verschiedenen Ortsinformationen umfasst;
und wobei die Spiellogik ein Spiel-Szenario und/oder eine Spiel-Szene und/oder einen Spiel-Standort umfasst.

2. Verfahren nach Anspruch 1, wobei das Erhalten der Ortsinformationen des Spiel-Benutzerendgeräts gemäß den Spiel-Benutzerinformationen Folgendes umfasst:
Senden einer die Spiel-Benutzerinformationen enthaltenden Ortsanfrageanforderung zu einem Positionsbestimmungssystem durch den Spiel-Server und Erhalten der Ortsinformationen des Spiel-Benutzerendgeräts von dem Positionsbestimmungssystem.

3. Verfahren nach Anspruch 1, wobei das Erhalten der Ortsinformationen des Spiel-Benutzerendgeräts gemäß den Spiel-Benutzerinformationen Folgendes umfasst:
Schätzen von aktuellen Ortsinformationen des Spiel-Benutzerendgeräts durch den Spiel-Server gemäß den das letzte Mal von einem Positionsbestimmungssystem erhaltenen Ortsinformationen des Spiel-Benutzerendgeräts.

4. Verfahren nach einem der Ansprüche 1 bis 3, wobei die Spiel-Benutzerinformationen eine Spiel-Benutzerendgerätenummer umfassen.

5. Spiel-Server, umfassend:
ein erstes Modul, betreibbar zum Erhalten von Ortsinformationen eines Spiel-Benutzerendgeräts gemäß Spiel-Benutzerinformationen;
ein zweites Modul, betreibbar zum Erhalten einer Spiel-Konfiguration bezüglich des Orts gemäß den Ortsinformationen;
ein drittes Modul, betreibbar zum Ausführen der Schritte des Startens eines Spiels, des Änderns einer Spiellogik und des Abrechnens für ein Spiel gemäß der Spiel-Konfiguration bezüglich des Orts;
wobei die Spiel-Konfiguration bezüglich des Orts eine Konfiguration für das Starten verschiedener Spiele gemäß verschiedenen Ortsinformationen, eine Konfiguration für das Ausführen verschiedener Spiellogiken gemäß verschiedenen Ortsinformationen und eine Konfiguration für das Ausführen verschiedener Spieltarife gemäß verschiedenen Ortsinformationen umfasst;
und wobei die Spiellogik ein Spiel-Szenario und/oder eine Spiel-Szene und/oder einen Spiel-Standort umfasst.

6. Spiel-Server nach Anspruch 5, wobei das erste Modul Folgendes umfasst:
ein erstes Submodul, betreibbar zum Senden einer die Spiel-Benutzerinformationen enthaltenden Ortsanfragean-forderung zu einem Positionsbestimmungs-system;
ein zweites Submodul, betreibbar zum Erhalten der Ortsinformationen des Spiel-Benutzerendgeräts von dem Positionsbestimmungssystem.

7. Spiel-Server nach Anspruch 5, wobei das erste Modul betreibbar ist zum Schätzen von aktuellen Ortsinformationen des Spiel-Benutzerendgeräts gemäß den das letzte Mal von einem Positionsbestimmungssystem erhaltenen Ortsinformationen des Spiel-Benutzerendgeräts.

8. Spiel-Server nach einem der Ansprüche 5 bis 7, wobei die Spiel-Benutzerinformationen eine Spiel-Benutzerendgerätenummer umfassen.

## Revendications

1. Procédé d'application d'informations de position, comprenant :
l'obtention, par un serveur de jeu, d'informations de position d'un terminal utilisateur de jeu en fonction d'informations d'utilisateur de jeu ;
l'obtention d'une configuration de jeu associée à la position en fonction des informations de position ;
l'exécution des étapes de lancement d'un jeu, changement d'une logique de jeu et chargement d'un jeu sur le serveur de jeu en fonction de la configuration de jeu obtenue associée à la position ;
dans lequel la configuration de jeu associée à la position comprend une configuration de lancement de différents jeux en fonction de différentes informations de position, une configuration d'exécution de différentes logiques de jeu en fonction de différentes informations de position, et une configuration d'exécution de différentes tarifications de jeu en fonction de différentes informations de position ;
et dans lequel la logique de jeu comprend un ou plusieurs d'un scénario de jeu, d'une scène de jeu et d'un site de jeu.

2. Procédé selon la revendication 1, dans lequel ladite obtention des informations de position du terminal utilisateur de jeu en fonction des informations d'utilisateur de jeu comprend :
l'envoi, par le serveur de jeu, d'une requête de demande de position contenant les informations d'utilisateur de jeu à un système de positionnement et l'obtention des informations de position du terminal utilisateur de jeu depuis le système de positionnement.

3. Procédé selon la revendication 1, dans lequel ladite obtention des informations de position du terminal utilisateur de jeu en fonction des informations d'utilisateur de jeu comprend :
l'estimation, par le serveur de jeu, d'informations de position actuelle du terminal utilisateur de jeu en fonction des dernières informations de position du terminal utilisateur de jeu obtenues depuis un système de positionnement.

4. Procédé selon l'une quelconque des revendications 1 à 3, dans lequel les informations d'utilisateur de jeu comprennent un numéro de terminal utilisateur de jeu.

5. Serveur de jeu, comprenant :
un premier module, exploitable pour obtenir des informations de position d'un terminal utilisateur de jeu en fonction d'informations d'utilisateur de jeu ;
un deuxième module, exploitable pour obtenir une configuration de jeu associée à une position en fonction des informations de position ;
un troisième module, exploitable pour exécuter les étapes de lancement d'un jeu, de changement d'une logique de jeu et de chargement d'un jeu en fonction de la configuration de jeu associée à la position ;
dans lequel la configuration de jeu associée à la position comprend une configuration de lancement de différents jeux en fonction de différentes informations de position, une configuration d'exécution de différentes logiques de jeu en fonction de différentes informations de position, et une configuration d'exécution de différentes tarifications de jeu en fonction de différentes informations de position ;
et dans lequel la logique de jeu comprend un ou plusieurs d'un scénario de jeu, d'une scène de jeu et d'un site de jeu.

6. Serveur de jeu selon la revendication 5, dans lequel le premier module comprend :
un premier sous-module, exploitable pour envoyer une requête de demande de position contenant les informations d'utilisateur de jeu à un système de positionnement ;
un second sous-module, exploitable pour obtenir les informations de position du terminal utilisateur de jeu depuis le système de positionnement.

7. Serveur de jeu selon la revendication 5, dans lequel le premier module est exploitable pour estimer des informations de position actuelle du terminal utilisateur de jeu en fonction des dernières informations de position du terminal utilisateur de jeu obtenues depuis un système de positionnement.

8. Serveur de jeu selon l'une quelconque des revendications 5 à 7, dans lequel les informations d'utilisateur de jeu comprennent un numéro de terminal utilisateur de jeu.
